# EUROPEAN PATENT SPECIFICATION

(11) **EP 2 326 434 B1**
(45) Date of publication and mention of the grant of the patent: **17.04.2013**
(21) Application number: 09704468.9
(22) Date of filing: 22.01.2009
(51) Int. Cl.: B09B 3/00, C05F 17/02, E04B 7/16

(54) **WASTE TREATMENT**
ABFALLBEHANDLUNG
TRAITEMENT DE DÉCHETS

(30) Priority: 22.01.2008 GB 0801182
(43) Date of publication of application: 01.06.2011
(73) Proprietor: BACKHUS GmbH, 26188 Edewecht (DE)
(72) Inventor: MCVEIGH, David, Creighton, Stowmarket IP14 6JU (GB)
(74) Representative: Jabbusch, Matthias
(86) International application number: PCT/GB2009/000157
(87) International publication number: WO 2009/093016

(56) References cited:
- WO-A-02/00571
- WO-A-94/03412
- WO-A-03/042129
- US-A- 5 204 263

## Description

### Field of the Invention

This invention relates to the treatment of waste, especially household, domestic waste.

### Background to the Invention

The disposal of domestic waste is becoming an ever more serious problem, with regulations being established which prevent untreated waste from being put into landfill sites and landfill sites becoming full.

It is known to carry out aerobic and anaerobic composting processes on quantities of waste, often within some form of composting chamber. To increase the rate at which organic composting action proceeds, it is known to incorporate measures in a waste treatment cycle where the waste is turned over periodically.

It is an aim of the present invention to overcome at least one problem associated with the prior art whether referred to herein or otherwise.

WO 02/00571 A1 shows a compost-box lid.

### Summary of the Invention

According to the present invention, there is provided a waste treatment chamber comprising a pair of parallel elongate walls as defined in claim 1.

The use of a chamber as set forth above allows a waste turning machine with an operating head on the end of an operating arm (for example a Backhus® Lane Turner) to travel the length of the chamber, running on the tops of the walls and straddling the chamber, with the operating arm extending into the chamber through the longitudinal opening. As the device travels along the chamber, the operating arm displaces the seal which reforms itself as the arm moves on, such that the opening remains sealed the length of the chamber. Depending on the cross-sectional shape of the arm, there may be a small area of opening into the chamber ahead and behind the instantaneous position of the arm, but this opening will be minimal.

The opening preferably extends down the middle of the chamber, and the flexible seal (which can be of rubber or any other suitable material) can be in two parts, each part being attached to one half of the roof, and the seal parts having rounded abutting portions.

The roof preferably comprises a framework of steel beams supporting an impervious covering of sheet material, and a tough layer of protective material lies between the beams and the sheet material, to protect the sheet material from objects thrown up in the chamber. The protective material may be rigid sheet material.

The chamber walls are preferably of concrete and have top surfaces which provide tracks for a vehicle, to enable a vehicle to travel the length of the chamber, along the tops of the walls. The walls may have, at one end, a region which slopes down to the ground, to enable a vehicle to ride up the sloping region to the top of the walls.

The sloping regions can include a ramp pivoted at the top of each sloping region, each ramp being actuable by a piston/cylinder unit to raise the ramp from a first position where it lies along the surface of the sloping region to a second position where it is substantially horizontal and to lower the ramp from the second position to the first position.

The chamber has a waste entry end and a waste exit end, and the sloping regions are preferably at the waste exit end of the chamber.

The end doors can be hinged and the doors at the waste exit end fold back into recesses in the walls so that the doors form no obstruction to the cross-section of the chamber between the walls

The invention extends to a waste treatment facility including a plurality of chambers as set forth above, the chambers being arranged side by side so that the walls intermediate the ends of the facility form boundaries to two chambers, one either side of each wall.

When the chambers are arranged side by side, with side walls in common and the roofs of the chambers are supported on steel beams, each beam mounted on a common wall can extend on both sides of the wall, to support one side of the roof in each of two adjoining chambers. The,beams can be angled upwards away from the walls so that water falling onto the roofs is directed away from the opening in the roof and towards the walls.

### Brief Description of the Drawings

The invention will now be further described, by way of example, with reference to the accompanying drawings, in which:
- Figure 1: is a schematic plan view of a waste treatment facility incorporating treatment chambers in accordance with the invention;
- Figure 2: is a schematic side view of an chamber;
- Figure 3: is a schematic plan view of the chamber of Figure 2;
- Figure 4: is a section through the chamber on the line IV-IV from Figure 2;
- Figure 5: is a view in the direction of the arrow A from Figure 3;
- Figure 6: is a section through the chamber showing a waste turning machine in place; and
- Figures 7, 8 and 9: show three stages in the introduction of a waste turning machine into the chamber.

### Description of the Preferred Embodiments

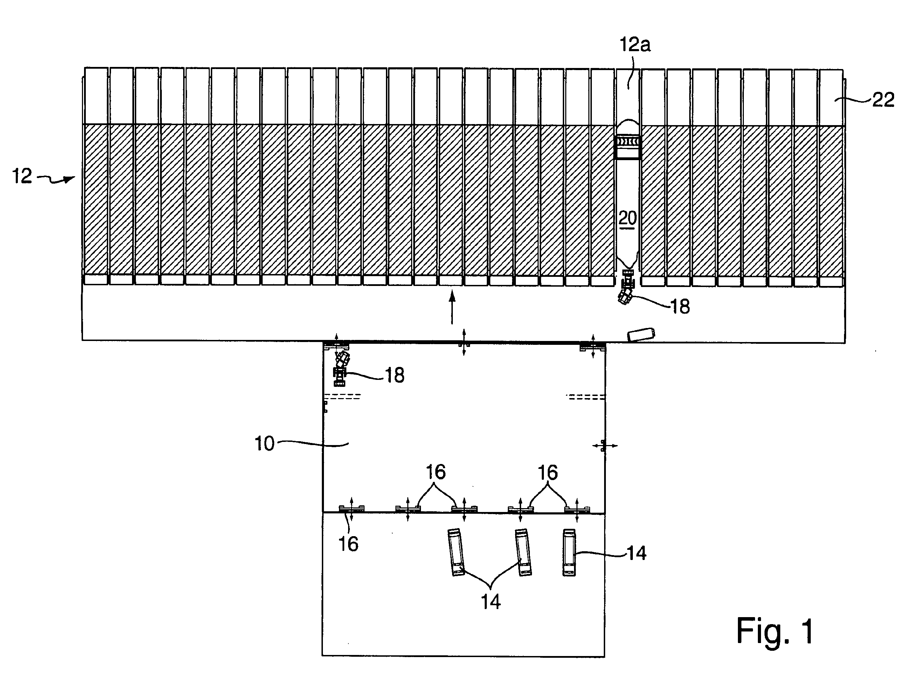

The treatment facility shown in Figure 1 comprises a large reception building 10, and a row of waste treatment chambers indicated generally at 12. Waste arrives at the facility on lorries 14 and is discharged through doors 16 into the building 10 where a degree of sorting takes place and, for example, glass and plastic is removed from the waste.

The sorted waste is then collected by shovel loading vehicles 18 and loaded into a treatment chamber 12. This is shown taking place in one of the chambers 12a, where the waste is indicated at 20.

In the chambers 12, the waste is treated to compress its volume, at least in part through aerobic or anaerobic digestion, and to allow time for any noxious vapours or odours to be greatly reduced. The waste is loaded into the chambers in batches, and remains in each chamber for a period of, for example, six weeks. During that time the waste is turned over to accelerate the digestion process and the turning over of the waste moves each batch along the chamber so that each turning operation results in one batch being discharged from the exit end of the chamber, and space being created for the loading of a new batch at the entry end of the chamber. Thus each batch travels the length of the chamber over the period for which it is in the chamber.

For example, the waste may be displaced rearwardly by a set amount (on average) towards the rear of the chamber by each pass of a waste turner machine. Since the length of the chamber is also predetermined, the time that the waste takes to travel from the front to the rear of the chamber can effectively be set and adjusted. The parameters for the time within the chamber include the length of the chamber and the frequency by which the waste turner machine is used. The waste may be displaced by 2.5 m for each pass of the machine and the chamber may have a length of 50 m. Accordingly, the waste on average will be displaced alonng the full length of the chamber by 20 passes of the waste turner machine. If it is calculated that the waste need to be in the chamber for 60 days then the waste turner machine should be used every three days in order to displace the waste material.

It is important that the chamber remain closed to assist the digestion process, to maintain the necessary temperature, to prevent the escape of noxious odours and to prevent vermin accessing the waste. Once the treatment in the chamber has been completed, the waste can be removed (from the waste exit end of each chamber, indicated at 22) and taken to landfill or any other final use.

In order to turn the waste whilst it is in the chamber, various machines are known. One particularly suitable machine for use in connection with the present invention is the Lane Turner manufactured by Backhus GmbH of Edewecht, Germany. A machine of this type is shown at 24 in the figures. The machine has a chassis 26, a cab 28 and a driven tracks 30 which move the machine in the desired direction. Depending from the machine is a turner drum 32 on the end of an operating arm 34.

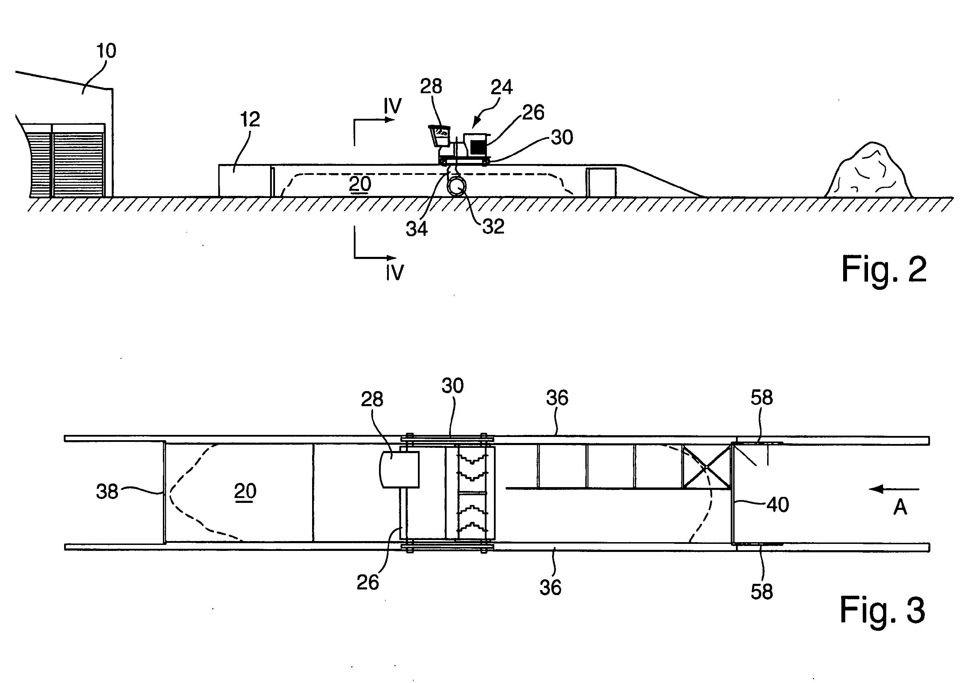

The chamber takes the form of two parallel walls 36. These are preferably solid concrete walls, and the turning machine 24 runs along the top of these walls, with the tracks 30 running on the walls. The chamber has a door 38 at the entry end and a door 40 at the exit end 22, as can be seen in Figure 3.

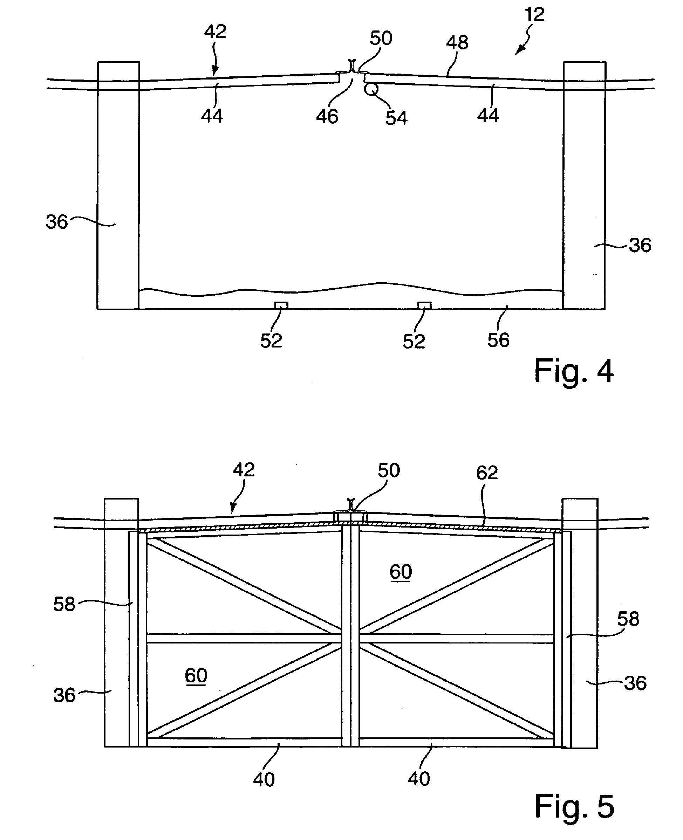

Turning now to Figure 4, it will be seen that the chamber 12 also has a roof generally designated 42. The roof is supported on structural steel (preferably stainless steel) beams 44 which extend inwards from each of the walls 36 but do not quite meet at the middle. A gap 46 is present between the ends of the beams. The beams support a covering in the form of an impervious sheet 48, and the gap 46 is closed by a pair of flexible gaskets 50. The gap 46 is of sufficient width to allow the operating arm 34 of the turning machine to pass through, and the nature of the gaskets 50 is such that they can be pushed aside by the arm 34 as the turning machine travels the length of the chamber, and then close together again once the arm has passed. In this way, even whilst the waste inside the chamber is being turned, the chamber remains substantially sealed, and there is no need to open and close the roof to allow turning to take place.

In particular, as previously described and as shown in the figures, the roof 42 is a cantilevered roof. The roof is formed from two cantilevered sections each of which project inwardly from a respective wall. The two roof sections do not meet but provide the gap 46 to enable the operating arm 34 to project downwardly therethrough. Accordingly, since the roof sections are cantilevered, the roof does not have any frame members extending between the walls which would hinder and prevent the smooth operation of the turning machine. This provides a clear gap extending the length of the chamber providing a complete passageway for the operating arm 34. Furthermore, since the roof sections are cantilevered, the roof is not supported by vertical suport struts located within the chamber. Such vertical support struts would interefere with operation and passage of the turner drum 32.

Because waste is likely to be thrown up against the underside of the roof 42 during turning, the covering may comprise a rigid panel as well as an impervious sheet so that any hard or sharp objects thrown up during turning of the waste do not penetrate the roof.

On the floor of the chamber are two aeration passages 15 (see GB Patent No.2400387), and an aeration pipe 54. Through the passages 52 and 54, air is recirculated throughout the chamber whilst the waste is being treated. A layer of wood chip or bark 56 is placed on the floor of the chamber to act as an air filter.

Figure 1 shows that the treatment chambers 12 are located side by side, with each wall (apart from the end walls) being in common to two adjacent chambers and forming a boundary to both chambers. Figures 4 and 5 show that the roof support structures in the form of steel beams 44 extend through the walls 36 and form roof supports for chambers on both sides of each wall 36. The beams are angled slightly upwards away from the wall 36, so that rain water falling on the roof is channelled towards the wall 36 from where it can run off along the length of the chamber.

Figure 5 shows the doors 40 at the end 22. At the end 22, treated waste is discharged, but also at this end, the turning machine 24 enters the chamber.. The doors are hinged to the side walls 36, and the walls have recesses 58 (see Figure 3) so that, when the doors are fully opened and housed in the recesses, there is no obstruction to the full width of the chamber, between the walls 36. The doors 40 have a structural framework and are clad with continuous panels 60, with a rubber seal 62 forming a seal between the tops of the doors and the roof 42.

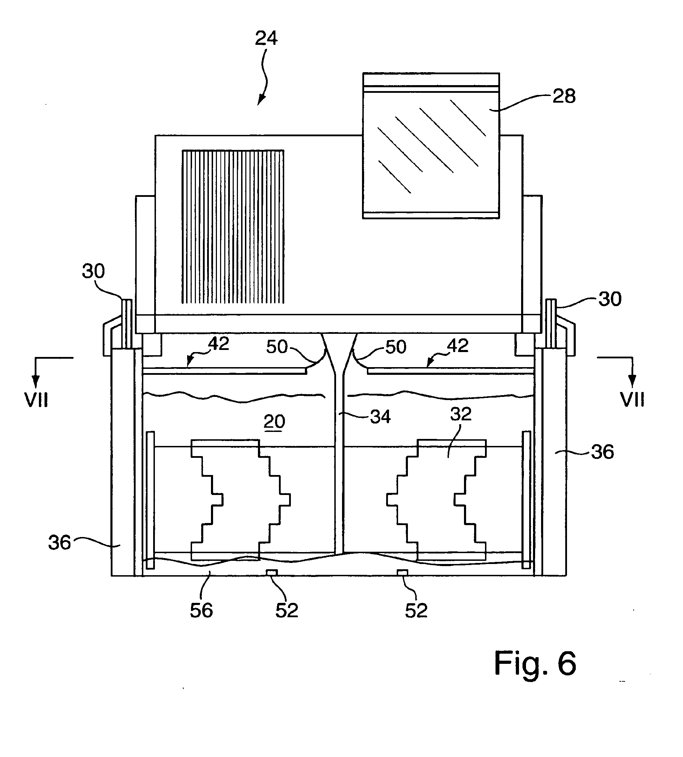

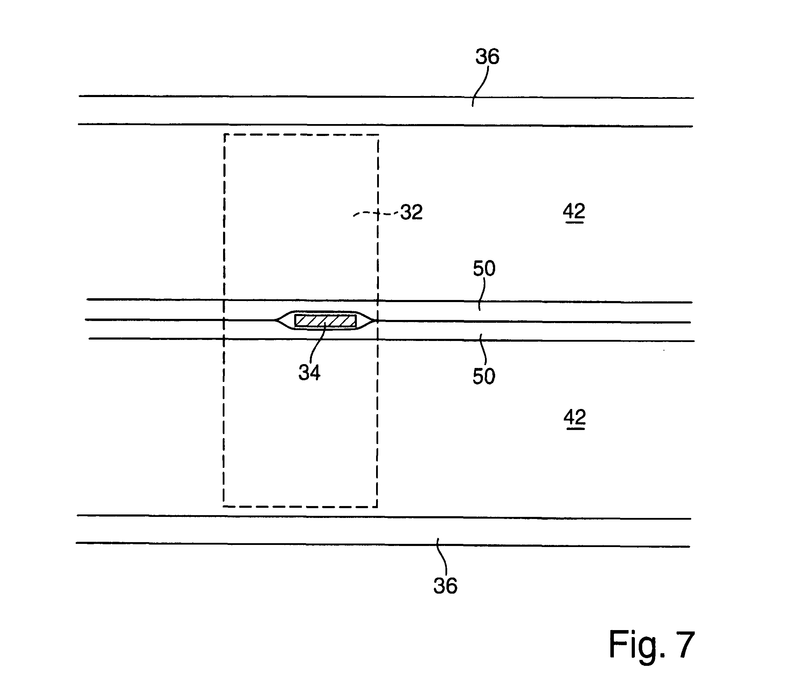

Figure 6 shows the turning machine 24 in place on the walls 36, with the turning drum 32 extending into the body of waste 20, and with the arm 34 extending through the gap 46, and displacing the flexible gaskets 50. This can also be seen from Figure 7, where it will be seen that the progress of the turning machine, with the arm 34, along the length of the chamber separates the gaskets 50 at the position of the arm 34, with the gaskets closing themselves as the arm passes.

The gaskets 50 are likely to be rubber but could be any other suitable material with sufficient flexibility, weather-resistance and resistance to any aggressive gases which might be generated within the chamber.

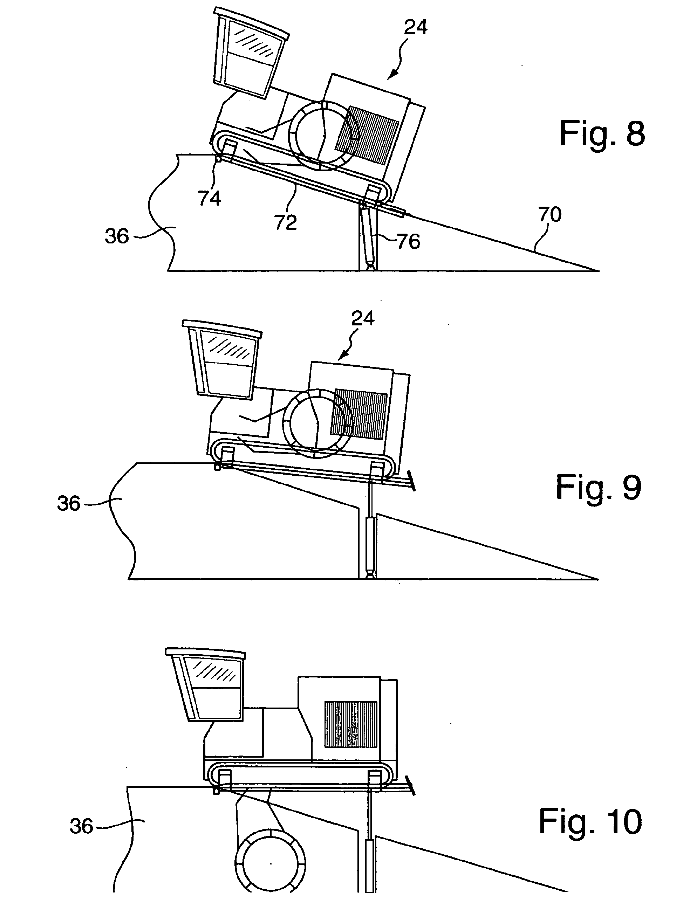

In operation of the facility shown in Figure 1, it will be necessary for the turning machine 24 to move from chamber to chamber. To enable the machine to do this, the ends of the walls 36 on the waste removal site 22 are sloped, as can be seen in Figures 8, 9 and 10. The machine 24 is designed so that the arm 34 can be retracted to allow the machine to travel on a level surface with the tracks 30 in contact with the ground. As can be seen in Figure 8 the machine can travel up the sloped walls 70. Hinged ramps 72 are provided at the top of the sloped walls, with one end of each ramp being pivoted at 74, and the other end of each ramp being connected to a jack 76. Once the machine 24 is fully positioned on the ramp 72, the jack 76 is actuated to raise the ramp 72 to the horizontal position, in line with the top of the walls 36. At this point the operating arm 34 and the turning drum 32 can be lowered into the chamber, and the machine can move forwards to commence turning operation. At this stage of course the doors 40 will be fully opened to allow the drum 32 to enter the chamber.

In practice, the machine will commence operation at the exit end of the chamber 22, and as the turning machine progresses along the length of the container it will cause the waste to be shifted along the length of the container. The waste that has been in the chamber longest will be thrown out at the end 22 from which it can be picked up by a suitable loader and transported to its final destination. Once the turner has completed its passage along the whole length of the chamber, there will then be an empty space near the doors 38, so that more untreated waste can be introduced into the chamber.

## Claims

1. A waste treatment chamber (12) comprising a pair of parallel elongate walls (36), a roof (42) spanning between the walls (36) and doors (38, 40) at both ends of the chamber (12) such that the interior volume of the chamber (12) is substantially closed, wherein the roof (12) comprises two roof sections projecting towards each other from respective walls (36) and where in each roof section comprises a cantilevered roof section, **characterized in, that** the roof sections are spaced apart to define a longitudinal opening (46) running the length of the chamber (12), parallel to the walls (36) and off set from the walls (36), the opening (46) being normally closed by a flexible seal (50) and wherein the longitudinal opening (46) is of sufficient width to enable an operating arm (34) of a machine (24) to extend into the chamber (12) through the longitudinal opening (46), where in the flexible seal (50) is a self-reforming seal.

2. A waste treatment chamber (12) according to Claim 1 in which the flexible seal (50) is arranged, in use, to be pushed aside by the arm (34) as the machine (24) travels along the chamber (12) and then closes again once the arm (34) has passed.

3. A chamber (12) as claimed in any preceding claim, wherein the opening (46) extends down the middle of the chamber (12).

4. A chamber (12) as claimed in any preceding claim, wherein the flexible seal (50) is in two parts, each part being attached to one half of the roof (42), and the seal parts (50) having rounded abutting portions.

5. A chamber (12) as claimed in any preceding claim, wherein the seal (50) is of rubber.

6. A chamber (12) as claimed in any preceding claim, wherein the roof (42) comprises a framework of steel beams (44) supporting an impervious covering of sheet material (48).

7. A chamber (12) as claimed in Claim 6, wherein a tough layer of protective material lies between the beams (44) and the sheet material (48), to protect the sheet material (48) from objects thrown up in the chamber (12).

8. A chamber (12) as claimed in any preceding claim, wherein the chamber walls (36) are of concrete and have top surfaces which provide tracks (30) for a vehicle (24), to enable a vehicle (24) to travel the length of the chamber (12), along the tops of the walls (36).

9. A chamber (12) as claimed in any preceding claim, wherein the walls (36) have, at one end, a region (70) which slopes down to the ground, to enable a vehicle (24) to ride up the sloping region (70) to the top of the walls (36).

10. A chamber (12) as claimed in Claim 9, wherein the sloping regions (70) include a ramp (72) pivoted at the top of each sloping region (70), each ramp (72) being actuable by a piston/cylinder unit (76) to raise the ramp (72) from a first position where it lies along the surface of the sloping region (70) to a second position where it is substantially horizontal and to lower the ramp (72) from the second position to the first position.

11. A chamber (12) as claimed in Claim 9 or Claim 10, wherein the chamber (12) has a waste entry end and a waste exit end (22), and the sloping regions (70) are at the waste exit end (22) of the chamber (12).

12. A chamber (12) as claimed in any preceding claim, wherein the chamber (12) has a waste entry end and a waste exit end (22), and hinged doors (38, 40) at both ends, wherein the walls (36) at the waste exit end (22) are provided with recesses (58) into which the doors (38, 40) can be opened so that when the doors (38, 40) are opened at the waste exit end (22), they lie outside the internal cross- section of the walls (36).

13. A waste treatment facility (10) including a plurality of chambers (12) as claimed in any preceding claim, the chambers (12) being arranged side by side so that the walls (36) intermediate the ends of the facility (10) form boundaries to two chambers (12), one either side of each wall (36).

14. A waste treatment facility (10) as claimed in Claim 13, wherein the roofs (42) of the chambers (12) are supported on steel beams (44), and each beam (44) is mounted on a wall (36) and extends on both sides of the wall (36), to support one side of the roof (42) in each of two adjoining chambers (12).

15. A waste treatment facility (10) as claimed in Claim 14, wherein the beams (44) are angled upwards away from the walls (36) so that water falling onto the roofs (42) is directed away from the opening (46) in the roof (42) and towards the walls (36).

## Patentansprüche

1. Abfallbehandlungskammer (12), umfassend ein Paar paralleler langgestreckter Wände (36), ein Dach (42), das sich zwischen den Wänden (36) erstreckt, und Türen (38, 40) an beiden Enden der Kammer (12), so dass der Innenraum der Kammer (12) im Wesentlichen abgeschlossen ist, wobei das Dach (12) zwei Dachabschnitte aufweist, die von jeweiligen Wänden (36) zueinander weisen und wobei jeder Dachabschnitt einen ausladenden Dachabschnitt aufweist, **dadurch gekennzeichnet, dass** die Dachabschnitte voneinander räumlich getrennt sind, um eine Längsöffnung (46) festzulegen, die entlang der Länge der Kammer (12) verläuft, parallel zu den Wänden (36) und versetzt von den Wänden (36), wobei die Öffnung (46) üblicherweise durch eine elastische Dichtung (50) geschlossen ist und wobei die Längsöffnung (46) eine ausreichend Breite aufweist, damit ein Funktionsarm (34) einer Maschine (24) durch die Längsöffnung (46) in die Kammer (12) hinein ausgefahren werden kann, wobei die elastische Dichtung (50) eine sich rückformende Dichtung ist.

2. Abwasserbehandlungskammer (12) nach Anspruch 1, wobei die elastische Dichtung (50) bei der Verwendung so angeordnet ist, dass sie von dem Arm (34) zur Seite gedrückt wird, wenn die Maschine (24) entlang der Kammer (12) gleitet, und sich dann wieder verschließt, wenn der Arm (34) vorbeigeglitten ist.

3. Kammer (12) nach einem der vorhergehenden Ansprüche, wobei die Öffnung (46) sich in der Mitte der Kammer (12) nach unten erstreckt.

4. Kammer (12) nach einem der vorhergehenden Ansprüche, wobei die elastische Dichtung (50) aus zwei Teilen besteht, wobei jeder Teil an einer Hälfte des Daches (42) befestigt ist und die Dichtungsteile (50) gerundete anstoßende Abschnitte aufweisen.

5. Kammer (12) nach einem der vorhergehenden Ansprüche, wobei die Dichtung (50) aus Gummi besteht.

6. Kammer (12) nach einem der vorhergehenden Ansprüche, wobei das Dach (42) eine Rahmenkonstruktion aus Stahlträgern (44) aufweist, die eine undurchlässige Abdeckung aus Blechmaterial (48) stützen.

7. Kammer (12) nach Anspruch 6, wobei sich eine widerstandsfähige Schicht aus Schutzmaterial zwischen den Trägern (44) und dem Blechmaterial (48) befindet, um das Blechmaterial (48) vor Gegenständen zu schützen, die in der Kammer (12) hochgeworfen werden.

8. Kammer (12) nach einem der vorhergehenden Ansprüche, wobei die Kammerwände (36) aus Beton sind und Oberseiten aufweisen, die Schienen (30) für ein Fahrzeug (24) vorsehen, damit ein Fahrzeug (24) entlang der Länge der Kammer (12) entlang der Oberseiten der Wände (36) fahren kann.

9. Kammer (12) nach einem der vorhergehenden Ansprüche, wobei die Wände (36) an einem Ende einen Bereich (70) aufweisen, der zu dem Boden hin abfällt, damit ein Fahrzeug (24) in dem abschüssigen Bereich (70) bis zu der Oberseite der Wände (36) hochfahren kann.

10. Kammer (12) nach Anspruch 9, wobei die abschüssigen Bereiche (70) eine Rampe (72) aufweisen, die an der oberen Seite jedes abschüssigen Bereichs (70) drehbar gelagert ist, wobei jede Rampe (72) durch eine-Kolben-/Zylindereinheit (76) betätigbar ist, um die Rampe (72) aus einer ersten Position, in der sie sich befindet, entlang der Oberfläche des abschüssigen Bereichs (70) in eine zweite Position anzuheben, in der sie im Wesentlichen waagerecht ist, und um die Rampe (72) von der zweiten Position in die erste Position abzusenken.

11. Kammer (12) nach Anspruch 9 oder 10, wobei die Kammer (12) ein Ende für den Abfalleinlass und ein Ende für den Abfallauslass (22), und die abschüssigen Bereiche (70) befinden sich an dem Ende für den Abfallauslass (22) der Kammer (12).

12. Kammer (12) nach einem der vorhergehenden Ansprüche, wobei die Kammer (12) ein Ende für den Abfalleinlass und ein Ende für den Abfallauslass (22) sowie Gelenktüren (38, 40) an beiden Enden aufweist, wobei die Wände (36) an dem Ende für den Abfallauslass (22) mit Einbuchtungen (58) versehen sind, in welche die Türen (38, 40) geöffnet werden können, so dass die Türen (38, 40), wenn sie an dem Ende für den Abfallauslass (22) geöffnet sind, sich außerhalb des inneren Querschnitts der Wände (36) befinden.

13. Abfallbehandlungsanlage (10), einschließlich mehrerer Kammern (12), nach einem der vorhergehenden Ansprüche, wobei die Kammern (12) Seite an Seite angeordnet sind, so dass die Wände (36) zwischen den Enden der Anlage (10) Abgrenzungen zu zwei Kammern. (12) bilden, eine Seite jeder Wand (36).

14. Abfallbehandlungsanlage (10) nach Anspruch 13, wobei die Dächer (42) der Kammern (12) von Stahlträgern (44) gestützt werden, und jeder Träger (44) auf einer Wand (36) angebracht ist und sich auf beiden Seiten der Wand (36) erstreckt, um eine Seite des Daches (42) in jeder von zwei angrenzenden Kammern (12) zu stützen.

15. Abfallbehandlungsanlage (10) nach Anspruch 14, wobei die Träger (44) nach oben winklig von den Wänden (36) weg angeordnet sind, so dass Wasser, das auf die Dächer (42) fällt, von der Öffnung (46) in dem Dach (42) weg und zu den Wänden (36) hin geleitet wird.

## Revendications

1. Chambre de traitement de déchets (12) comprenant une paire de parois allongées parallèles (36), un toit (42) s'étendant entre les parois (36) et des portes (38, 40) aux deux extrémités de la chambre (12), de sorte que le volume intérieur de la chambre (12) est substantiellement fermé, dans laquelle le toit (12) comprend deux parties de toit faisant saillie l'une vers l'autre à partir de parois respectives (36), et où chaque partie de toit comprend une partie de toit en porte-à-faux, **caractérisée en ce que** les parties de toit sont espacées de manière à définir une ouverture longitudinale (46) s'étendant le long de la chambre (12), parallèlement aux parois (36) et en décalage par rapport aux parois (36), l'ouverture (46) étant normalement fermée par un joint souple (50), et dans lequel l'ouverture longitudinale (46) est suffisamment large pour permettre à un bras de service (34) d'une machine (24) de s'étendre dans la chambre (12) à travers l'ouverture longitudinale (46), où le joint souple (50).

2. Chambre de traitement de déchets (12) selon la revendication 1, dans lequel, pendant l'utilisation, le joint souple (50) est agencé de manière à être poussé sur le côté par le bras (34) lorsque la machine (24) se déplace le long de la chambre (12) puis se referme une fois que le bras (34) est passé.

3. Chambre (12) selon l'une quelconque des revendications précédentes, dans laquelle l'ouverture (46) s'étend vers le bas, vers le centre de la chambre (12).

4. Chambre (12) selon l'une quelconque des revendications précédentes, dans laquelle le joint souple (50) est conçu en deux pièces, chacune des pièces étant reliée à une moitié du toit (42), et les pièces de joint (50) présentant des portions arrondies formant des butées.

5. Chambre (12) selon l'une quelconque des revendications précédentes, dans laquelle le joint (50) est constitué de caoutchouc.

6. Chambre (12) selon l'une quelconque des revendications précédentes, dans laquelle le toit (42) comprend un cadre de barres en acier (44) supportant une couverture imperméable de matériau en feuille (48).

7. Chambre (12) selon la revendication 6, dans laquelle une couche résistante de matériau de protection est disposée entre les barres (44) et le matériau en feuille (48), pour protéger le matériau en feuille (48) contre des objets rejetés vers le haut dans la chambre (12).

8. Chambre (12) selon l'une quelconque des revendications précédentes, dans laquelle les parois de la chambre (36) sont en béton et ont des surfaces supérieures fournissant des pistes (30) pour un véhicule (24), pour permettre à un véhicule (24) de se déplacer le long de la chambre (12) dans la longueur du haut des parois (36).

9. Chambre (12) selon l'une quelconque des revendications précédentes, dans laquelle les parois possèdent, à une extrémité, une région (70) penchée vers le sol, pour permettre à un véhicule (24) de monter sur la région penchée (70), vers le haut des parois (36).

10. Chambre (12) selon la revendication 9, dans laquelle les régions penchées (70) incluent une rampe (72) pivotant en haut de chaque région penchée (70), chaque rampe (72) pouvant être actionnée par une unité de piston/cylindre (76), pour relever la rampe (72) à partir d'une première position dans laquelle elle s'applique le long de la surface de la région penchée (70), vers une deuxième position dans laquelle elle est substantiellement horizontale, et pour abaisser la rampe (72) de la deuxième position vers la première position.

11. Chambre (12) selon la revendication 9 ou 10, dans laquelle la chambre (12) possède une extrémité d'entrée de déchets et une extrémité de sortie de déchets (22), et les régions penchées (70) se trouvent à l'extrémité de sortie de déchets (22) de la chambre (12).

12. Chambre (12) selon l'une quelconque des revendications précédentes, dans laquelle la chambre (12) possède une extrémité d'entrée de déchets et une extrémité de sortie de déchets (22) ainsi que des portes pivotantes (38, 40) aux deux extrémités, dans laquelle les parois (36) à l'extrémité de sortie de déchets (22) sont pourvues de renfoncements (58) dans lesquels les portes (38, 40) peuvent être ouvertes, de sorte que lorsque les portes (38, 40) sont ouvertes à l'extrémité de sortie de déchets (22), elles se trouvent à l'extérieur de la section transversale interne des parois (36).

13. Installation de traitement de déchets (10) comprenant une pluralité de chambres (12) selon l'une quelconque des revendications précédentes, les chambres (12) étant agencées côte à côte, de sorte que les parois (36) entre les extrémités de l'installation (10) délimitent les deux chambres (12) de part et d'autre de chaque paroi (36).

14. Installation de traitement de déchets (10) selon la revendication 13, dans laquelle les toits (42) des chambres (12) sont supportés sur des barres d'acier (44), et chaque barre (44) est montée sur une paroi (36) et s'étend des deux côtés de la paroi (36), pour supporter un côté du toit (42) dans chacune de deux chambres (12) adjacentes.

15. Installation de traitement de déchets (10) selon la revendication 14, dans laquelle les barres (44) sont coudées vers le haut à distance des parois (36), de manière à ce que l'eau coulant sur les toits (42) soit guidée à distance de l'ouverture (46) dans le toit (42) et vers les parois (36).
